# EUROPEAN PATENT APPLICATION

(11) **EP 3 163 056 A1**
(43) Date of publication of application: **03.05.2017**
(21) Application number: 14895960.4
(22) Date of filing: 27.06.2014
(51) Int. Cl.: F02D 15/04, F02D 15/02

(54) **METHOD FOR ENABLING VARIABLE COMPRESSION RATIO AND VARIABLE AIR-FUEL RATIO FOR INTERNAL COMBUSTION ENGINE**

(71) Applicant: Yang, Zengli, Beijing 102487 (CN)
(72) Inventor: Yang, Zengli, Beijing 102487 (CN)
(74) Representative: Müller Hoffmann & Partner
(86) International application number: PCT/CN2014/000624
(87) International publication number: WO 2015/196315

(57) **Abstract**

The present invention provides a method for realizing variable compression ratio and variable air-fuel ratio of an internal combustion engine, the method comprising the following steps: dividing an air intake volume in a cylinder into a first air intake volume and a second air intake volume, designing a compression ratio according to the first air intake volume and opening a throttle to enable the air intake volume to reach the first air intake volume; increasing the opening of the throttle to increase the air inflow to enable the second air intake volume to start the intake, the second air intake volume going beyond the first air intake volume, the compression ratio increasing with the increase of the air intake volume, the compression density of a fuel air mixture increasing with the increase of the compression ratio, and the air-fuel ratio reducing with the increase of the compression density of the fuel air mixture; and correcting, by an electronic control unit, a duration of ignition in real time according to a detonation signal fed back by a knock sensor, and controlling the fuel-injection quantity in real time to ensure the compression density required by the combustion of a lean fuel air mixture.

## Description

### Technical Field

The present invention relates to an internal combustion engine, and in particular, relates to a method for realizing variable compression ratio and variable air-fuel ratio of an internal combustion engine.

### Background Art

In recent years, with the raised requirements of the economy for the internal combustion engine and stricter regulations on internal combustion engine emissions, to improve the internal combustion engine fuel economy and emissions performance has become the endeavor direction of designing and manufacturing. Conventional internal combustion engines have always sought to increase the combustion temperature, by which means the combustion pressure can be increased. However, the higher the combustion temperature is, the more heat is taken away by the exhaust gas. The combustion temperature of the conventional internal combustion engine is as high as 2,200°C-2,500°C while the exhaust temperature is as high as 1,000°C-1,200°C, and then the exhaust gas must be discharged in the form of flame which takes away a large amount of heat. Therefore, the thermal efficiency of the conventional internal combustion engine is only about 30%, which means that 70% of the combustion heat is directly discharged into the atmosphere without participating in working.

Chinese Patent No. CN200580008399.7 discloses an internal combustion engine which archives ultra-expansion working. The ultra-expansion working can increase the expansion volume to reduce the exhaust pressure, but the exhaust temperature cannot be further lowered. The root cause lies in the inherent flaw of the high combustion temperature of the conventional internal combustion engine.

### Summary of the Invention

The present invention provides a method for realizing variable compression ratio and variable air-fuel ratio of an internal combustion engine, aiming at reduce the combustion temperature, increase the combustion pressure, and improve the utilization of combustion heat.

The method for realizing variable compression ratio and variable air-fuel ratio of an internal combustion engine comprises the following steps:
(1) dividing an air intake volume in a cylinder into a first air intake volume and a second air intake volume, designing a compression ratio according to the first air intake volume and opening a throttle to enable the air intake volume to reach the first air intake volume;
(2) increasing the opening of the throttle to increase the air inflow to enable the second air intake volume to start the intake, the second air intake volume going beyond the first air intake volume, the compression ratio increasing with the increase of the air intake volume, the compression density of a fuel air mixture increasing with the increase of the compression ratio, and the air-fuel ratio reducing with the increase of the compression density of the fuel air mixture; and
(3) correcting, by an electronic control unit, a duration of ignition in real time according to a detonation signal fed back by a knock sensor, and controlling the fuel-injection quantity in real time to ensure the compression density required by the combustion of a lean fuel air mixture.

Preferably, the designed compression ratio is a compression ratio of the internal combustion engine under a low power operating condition, and the first air intake volume is an air intake volume of the internal combustion engine under a low power operating condition, and the second air intake volume is an air intake volume of the internal combustion engine under a high power operating condition.

Preferably, the second air intake volume is larger than the first air intake volume.

Preferably, the internal combustion engine is a four-stroke spark ignition internal combustion engine, the variable range of the compression ratio of the four-stroke spark ignition internal combustion engine is 10:1-26.7:1, and the variable range of the air-fuel ratio is 15:1-32:1.

Preferably, the internal combustion engine is a four-stroke spark ignition internal combustion engine, the variable range of the compression ratio of the four-stroke spark ignition internal combustion engine is 14:1-40:1, and the variable range of the air-fuel ratio is 18:1-50:1.

Preferably, the internal combustion engine is a four-stroke compression ignition internal combustion engine, the variable range of the compression ratio of the four-stroke compression ignition internal combustion engine is 20:1-48:1, and the variable range of the air-fuel ratio is 16:1-60:1.

Preferably, the internal combustion engine is a two-stroke compression ignition internal combustion engine, the variable range of the compression ratio of the two-stroke compression ignition internal combustion engine is 25:1-60:1, and the variable range of the air-fuel ratio is 30:1-70:1.

Preferably, the method for realizing variable compression ratio and variable air-fuel ratio of an internal combustion engine comprises cancelling the closed-loop control of an oxygen sensor and adjusting the fuel-injection pulse width according to the knock signal of the knock sensor.

The method for realizing variable compression ratio and variable air-fuel ratio of an internal combustion engine of the present invention is that the air intake volume of the cylinder is divided into a first intake volume and a second intake volume, a compression ratio is designed according to the first air intake volume; the second air intake volume goes beyond the first air intake volume. Since the combustion chamber volume is constant, the compression ratio increases, the compression density of the fuel air mixture increases, the air-fuel ratio decreases, and the combustion temperature decreases, therefore, the exhaust temperature is reduced from 1,200°C to 180°C-300°C, and the thermal efficiency of the internal combustion engine is greatly improved.

### Brief Description of the Drawings

Figure 1 is a structure schematic diagram of a method for realizing variable compression ratio and variable air-fuel ratio of an internal combustion engine according to the present invention;
Figure 2 is a schematic diagram of the density of fuel molecules of the traditional theoretical air-fuel ratio;
Figure 3 is a schematic diagram of the density of the fuel molecules of the lean fuel air mixture;
Figure 4 is a schematic diagram of the density of the fuel molecules of the lean fuel air mixture having high compression density according to the present invention; and
Figure 5 is a flow chart showing the controlling of the method for realizing variable compression ratio and variable air-fuel ratio of an internal combustion engine according to the present invention.

### Detailed Description of the Invention

To make the technical solutions and advantages of the embodiments of the present invention become more apparent, the technical solutions of the embodiments of the present invention will be clearly and completely described with reference to the accompanying drawings of the embodiments of the present invention. Obviously, the described embodiments are only a part, rather than all of the embodiments of the present invention. All other embodiments obtained by those skilled in the art without the inventive effort according to the embodiments of the present invention, fall within the scope of the present invention.

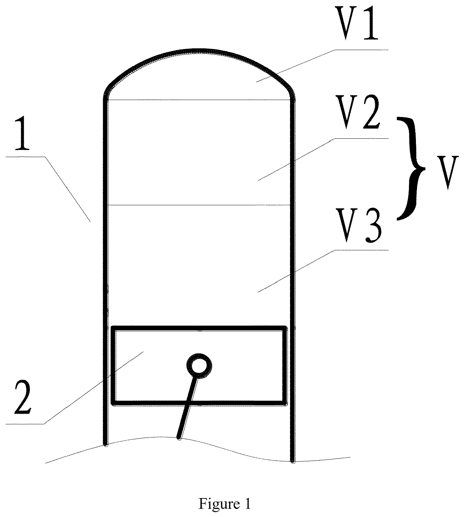

As shown in Figure 1, an internal combustion engine comprises a cylinder 1 and a piston 2, wherein the cylinder 1 comprises a working volume V and a combustion chamber volume V1. The working volume V comprises an air intake volume V2 of low power operating condition and an air intake volume V3 of high power operating condition, wherein the air intake volume V3 of high power operating condition is larger than the air intake volume V2 of low power operating condition.

For conventional internal combustion engine, the compression ratio is designed according to the cylinder working volume V, i.e., V:V1. For the conventional spark ignition internal combustion engine, the actual air intake volume of the low power operating condition is very small, the actual compression ratio is low, and the thermal efficiency is very low; and the air intake volume of high power operating condition is large, the actual compression ratio is high, and the thermal efficiency is high. For the conventional compression ignition internal combustion engine, the air intake volume of low power operating condition is large, the consumption of compression power is large, and it is difficult to start. Since the inflation coefficient of a naturally aspirated internal combustion engine can only reach about 0.8 and cannot reach the designed compression ratio. Then, the question is how to make the inflation coefficient of 0.8 to reach the designed compression ratio.

In the present invention, the compression ratio is designed according to the inflation coefficient of 0.8 (depending on the cylinder volume, it is 0.8). As long as the inflation coefficient reaches 0.8, it is considered to reach the designed air intake volume, which is equivalent to reaching the designed compression ratio. Assumption: if the cylinder inflation coefficient can exceed 0.8, such as 0.9, 1.0, 1.1 or greater, because the compression ratio is designed according to the inflation coefficient of 0.8, as long as the inflation coefficient exceeds 0.8, it is considered to exceed the designed air intake volume, which is equivalent to exceeding the designed compression ratio, and which achieves a variable compression ratio. However, such assumption cannot be achieved, because the inflation coefficient cannot exceed 0.8.

The above assumption provides a reverse-thinking variable compression ratio solution: since it is possible to design the compression ratio according to the inflation coefficient of 0.8, it is also possible to design the compression ratio according to the air intake volume V2 of low power operating condition, i.e. depending on that the cylinder volume is V2, as long as the air intake volume reaches the air intake volume V2 of low power operating condition, it is considered to reach the designed air intake volume, which is equivalent to reaching the designed compression ratio.

The core of the method for realizing variable compression ratio and the variable air-fuel ratio of the present invention is to design the compression ratio according to the air intake volume V2 of low power operating condition, i.e. V2:V1. Therefore, as long as the air intake volume of the cylinder reaches the air intake volume V2 of low power operating condition, it is considered to reach the designed air intake volume, which is equivalent to reaching the designed compression ratio. As long as the air intake volume exceeds the air intake volume V2 of low power operating condition, it is considered to exceed the designed air intake volume, which is equivalent to exceeding the design compression ratio.

The advantages of the present invention, where the compression ratio is designed according to the air intake volume V2 of low power operating condition, are as follows:
For the low power operating condition, as long as the air intake volume of the spark ignition and compression ignition internal combustion engines under the low power operating condition reaches V2, since the compression ratio is designed according to the air intake volume V2 of low power operating condition, it is considered to reach the designed air intake volume, which is equivalent to reaching the designed compression ratio. Thus, it is possible to obtain a higher compression ratio under the low power operating condition, and compression work is reduced under the low power operating condition, and it is easy to start.

For the high power operating condition, the air intake volume V3 of high power operating condition of the spark ignition and compression ignition internal combustion engines exceeds the air intake volume V2 of low power operating condition. Since the combustion chamber volume V1 is constant, as long as the air intake volume exceeds the air intake volume V2 of low power operating condition, it is considered to exceed the designed intake volume, which is equivalent to exceeding the designed compression ratio. The compression ratio increases with continuous increase of the air intake volume, so as to achieve the variable compression ratio.

The technical solution of the present invention achieves the variable compression ratio, and the burning rate of the lean fuel air mixture is increased. However, the detonation may occur when the burning rate increases. The conditions for the occurrence of detonation are: i. a higher operating temperature; ii. a higher compression ratio; and iii. a higher concentration of fuel air mixture. For the above three conditions, if any one of them can be reduced, the detonation may be eliminated. It is obvious that the higher operating temperature and the higher compression ratio are helpful to improve the thermal efficiency.

The present invention eliminates the detonation by means of reducing the concentration of the fuel air mixture. The high power operating condition achieves the variable compression ratio. The compression ratio increases as the air intake volume V3 of high power operating condition continuously increases, which is equivalent to the continuous increase of the compression ratio, the air-fuel ratio of high-power working condition decreases as the compression ratio continuously increases, so as to achieve the variable air-fuel ratio.

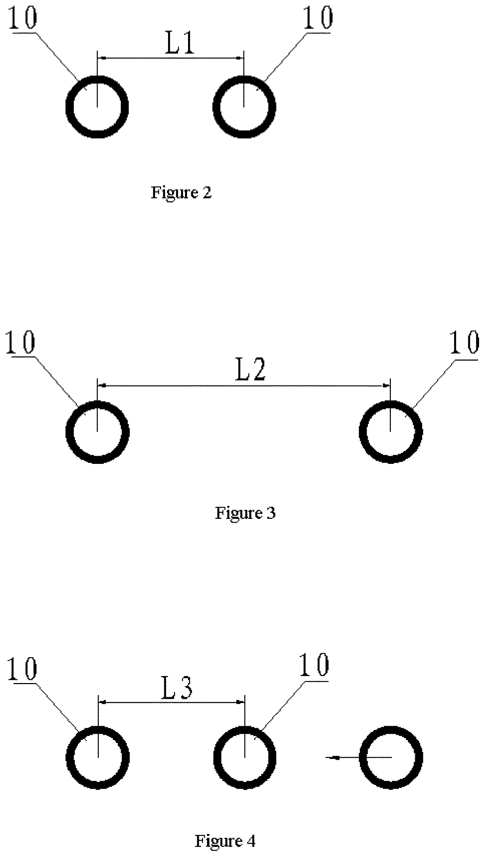

As shown in Figure 2, in the case of the theoretical air-fuel ratio, the distance between the fuel molecules 10 is L1. The fuel density in the fuel air mixture is the density required by the combustion. This fuel density is easily ignited and can be burned normally.

As shown in Figure 3, in the case of the lean fuel air mixture, the distance between the fuel molecules 10 is L2, L2>L1. The fuel density does not reach the level required by the combustion, and therefore the lean fuel air mixture cannot be ignited and cannot be burned normally.

As shown in Figure 4, in the case that the lean fuel air mixture is at a high compression density, the distance between the fuel molecules 10 is L3, L3=L1. Although the fuel air mixture is very lean, it can reach the compressed density required by the combustion by further compressing, thus the lean fuel air mixture can be ignited and burned normally.

In summary, since the fuel cannot be compressed, and the air can be compressed, in the process of further compression of the lean fuel air mixture, the fuel compression density increases, so as to reach the density required by the combustion. Therefore, as long as the fuel air mixture reaches the compression density required by the combustion, it is possible to be burned normally.

For example, 1 g of fuel is mixed with 14.7 g of air at a compression ratio of 10:1, i.e., a traditional theoretical air-fuel ratio, where the fuel air mixture is compressed at 10:1, and the fuel can be burned normally.

For example, 1 g of fuel is mixed with 29.4 g of air at a compression ratio of 10:1, and the fuel in the fuel air mixture does not reach the density required by the combustion, and cannot be burned normally. If the compression ratio is increased to 20:1, although the fuel air mixture is very lean, it reaches the compression density required by the combustion, and it can be burned normally. It can be seen that the fuel air mixture can be very lean, as long as it reaches the compression density required by the combustion, it can be burned normally, since the reached density has changed its physical properties.
Experiment 1: 1 g of gasoline is mixed with 14.7 g of the air at a compression ratio of 10:1, i.e., a theoretical air-fuel ratio combustion mode. The combustion temperature after ignition is 2,500°C and the combustion pressure is 6 MPa, which can do working.
Experiment 2: 1 g of gasoline is mixed with the oxygen extracted from the 14.9 g of the air, i.e., pure oxygen combustion, at a compression ratio 10:1. The combustion temperature after ignition is 3,000°C, and the combustion pressure is 1 Mpa, high in combustion temperature, which may cause the detonation, as well as low in combustion pressure, which cannot do working.
Experiment 3: 1 g of gasoline is mixed with 14.7 g × 2 times of the air at a compression ratio of 10:1, i.e., a lean combustion mode, which cannot be ignited and cannot do working.
Experiment 4: 1 g of gasoline is mixed with 14.7 g × 2 times of the air at a compression ratio of 20: 1, i.e., a high compression density lean fuel air mixture combustion mode. The combustion temperature after ignition is 1,500°C and the combustion pressure is 9 Mpa, without detonation. As the combustion pressure is increased, the power is increased.
Experiment 5: 1 g of gasoline is mixed with 14.7 g × 4 times of the air at a compression ratio of 40:1, i.e., a high compression density lean fuel air mixture combustion mode. The combustion temperature after ignition is 1,000°C and the combustion pressure of 15 Mpa, without detonation. As the combustion pressure is increased, the power is increased greatly.

Experimental analysis: Experiments 2, 3, 4, and 5 are compared with Experiment 1.

Experiment 2: for pure oxygen combustion, the burning rate is extremely high, since no other gas, as a medium, absorbs heat and expands in the combustion process, the combustion temperature is high, and the combustion pressure is very low, which cannot do working.

Experiment 3: the density of the fuel in the lean fuel air mixture does not reach the required level of combustion. Since the fuel cannot be ignited, it cannot do working.

Experiment 4: the lean fuel air mixture reaches the compression density required by the combustion, and it can be burned normally. A large amount of other gases absorb heat in the combustion process, and thus the combustion temperature decreases; The large amount of other gases quickly expand after absorbing heat, and thus the combustion pressure increases, and the power is increased.

Experiment 5: the lean fuel air mixture reaches the compression density required by the combustion, and it can be burned normally. Meanwhile, a large amount of other gases absorb heat during the combustion process, as a result the combustion temperature further decreases; and the large amount of other gases quickly expand after absorbing heat, thus the combustion pressure is further increased, and the power is increased greatly.

The experiments show that: the theoretical air-fuel ratio, of which the concept is: burning 1 g of fuel consumes 14.3 g-14.7 g of air, and the actual meaning lie in that: burning 1 g of fuel just need to consume oxygen in these air, and that's all, does not mean that it is the best burning. Because, during the combustion process, only oxygen in the air participates in combustion while a large amount of other gases absorb heat, and therefore, the combustion temperature decreases, the large amount of other gases quickly expand after absorbing heat, and in turn the combustion pressure increases, and the power is increased greatly.

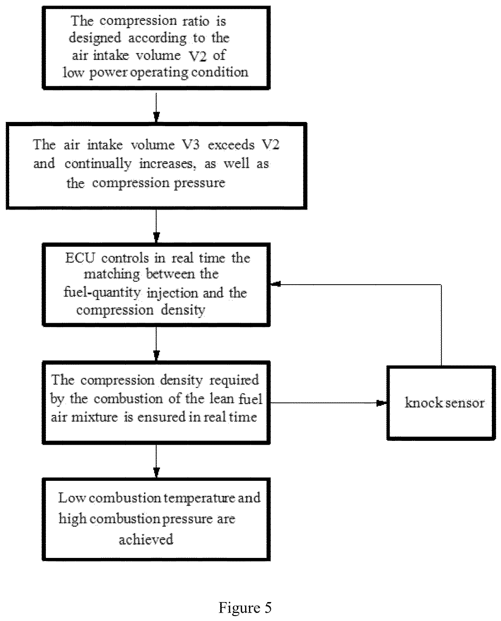

As shown in Figure 5, the compression ratio of the internal combustion engine is designed according to the air intake volume V2 of low power operating condition; the air intake volume V3 of high power operating condition exceeds the air intake volume V2 of low power operating condition and continually increases, as well as the compression pressure. ECU (electronic control unit of a system) controls in real time the matching between the fuel-injection quantity and the compression density, and ensures in real time the compression density required by the combustion of the lean fuel air mixture; during the operation of the internal combustion engine, the changes of the opening of the throttle, rotation speed and the temperature can affect the burning rate. After the knock sensor detects the knock signal, it sends feedback to the ECU in real time, and the ECU reduces the fuel-injection quantity in real time, until the knock signal is gradually weakened, the best scenario is that a slight knocking is detected by the knock sensor. (The conventional internal combustion engine changes the injection pulse width according to the oxygen content in the exhaust gas collected by the oxygen sensor and changes the fuel-injection quantity.) If the slight knock signal gradually disappears, it indicates that the burning rate is reduced, and the ECU may increase the fuel-injection quantity to increase the burning rate until the knock sensor detects the slight knocking signal, so that the internal combustion engine always works at the critical state of detonation, which eventually achieves a low combustion temperature and a high combustion pressure.

Strong acceleration function: when the internal combustion engine is at maximum power, the combustion temperature reaches the lowest, the combustion pressure reaches the highest, and the internal combustion engine works at the highest efficiency point. At this moment, no matter the fuel air mixture is slightly rich or slightly lean, it will not detonate. According to this feature, an appropriate increase in fuel-injection quantity can increase the output power, so as to achieve the strong acceleration function. The internal combustion engine is used for the car, and when the car encounters a situation which needs strong acceleration, such as overtaking, going uphill and the like, it can start the strong acceleration function on the premise that it does not affect emissions.

Application of the strong acceleration function: in the case that the opening of the throttle has reached the maximum and the power has reached the maximum, if the strong acceleration is needed to be jogged once quickly by manually operating the throttle, a strong acceleration signal may be triggered by the throttle position sensor or other means, and the fuel-injection quantity may increase appropriately to start the strong acceleration function which further improves the practical value of the internal combustion engine.

The method for realizing variable compression ratio and variable air-fuel ratio of the present invention is to design the compression ratio according to the air intake volume V2 of low power operating condition; and to ensure the compression density required by the combustion of the lean fuel air mixture. Therefore, the complicated variable compression ratio and variable air-fuel ratio are achieved by a simple method, and the method is simple, practical, and reliable.

The present invention uses the combustion mode of high compression density lean fuel air mixture, the combustion temperature of the lean fuel air mixture is reduced, the oxygen is sufficient and the combustion is sufficient. Therefore, emissions of the CO (carbon monoxide) and THC (hydrocarbon) are only 1/10 of those of a conventional internal combustion engine. The emission of NOx is only 1/6 of that of a conventional internal combustion engine, because the combustion temperature is reduced and NOx (nitrogen oxide) loses high-temperature production conditions. It can be seen that not only the fuel consumption is greatly reduced, but also pollution emissions are greatly reduced, which is a major progress for the combustion of the internal combustion engine.

### First embodiment

This embodiment is a four-stroke spark ignition internal combustion engine;
the cylinder working volume is 400 ml, and the combustion chamber volume V1 is designed as 15 ml;
the air intake volume V2 of low power operating condition is 150 ml;
the compression ratio of low power operating condition is 10:1;
the air-fuel ratio of low power operating condition is 15:1;
the air intake volume V3 of high power operating condition is 250 ml;
the range of variable compression ratio of high power operating condition is 10:1-26.7:1; and
the range of variable air-fuel ratio of high power operating condition is 15:1-32:1;

In this embodiment, the compression ratio is designed according to the air intake volume V2 of low power operating condition, and as long as the intake air volume reaches V2, it is considered to reach the designed compression ratio. The air intake volume V2 of low power operating condition is 150 ml, the combustion chamber volume V1 is designed as 15 ml, the compression ratio of low power operating condition is 10:1, and the air-fuel ratio is 15:1. Under the low power operating condition, the internal combustion engine can reach a higher compression ratio. The actual pressure of low power operating condition is increased, and the compression work is reduced, and it is easy to start.

The internal combustion engine transits from the low power operating condition to the high power operating condition, and the opening of the throttle is increased and the air intake volume V3 of high power operating condition exceeds the air intake volume V2 of low power operating condition. Since the combustion chamber volume V1 is constant while the air intake volume increases, as long as the air intake volume exceeds the air intake volume V2 of low power operating condition, it is equivalent to increasing the compression ratio. The compression ratio increases as the air intake volume V3 of high power operating condition continuously increase, and the variable range of the compression ratio is 10:1-26.7:1.

Under the high power operating condition, the actual compression pressure of the internal combustion engine is increased, the compression density of the fuel air mixture is increased and the burning rate is accelerated. The ECU reduces the fuel-injection quantity in real time according to the feedback signal from the knock sensor and reduces the concentration of the fuel air mixture, maintains the matching between the concentration and the compression density of the fuel air mixture in real time and controls the duration of ignition in real time. The air-fuel ratio decreases as the compression ratio continuously increases, and the variable range of the air-fuel ratio is 15:1-32:1.

This embodiment employs the method for realizing variable compression ratio and variable air-fuel ratio, so as to ensure the compression density required by the combustion of the lean fuel air mixture and to maintain the burning rate required by the operation. High compression density generates high combustion pressure which can increase the power. The lean fuel air mixture generates low combustion temperature which can reduce pollution emissions, and be an effective measure to improve the thermal efficiency of internal combustion engine.

In this embodiment, the exhaust temperature is lowered to 300 °C, so that the thermal efficiency is greatly improved.

### Second embodiment

This embodiment is a four-stroke spark ignition internal combustion engine;
the cylinder working volume is 600 ml, and the combustion chamber volume V1 is designed as 15 ml;
the air intake volume V2 of low power operating condition is 210 ml;
the compression ratio of low power operating condition is 14:1;
the air-fuel ratio of low power operating condition is 18:1;
the air intake volume V3 of high power operating condition is 360 ml;
the range of variable compression ratio of high power operating condition is 14:1-40:1; and
the range of variable air-fuel ratio of high power operating condition is 18:1-50:1;

In this embodiment, the compression ratio is designed according to the air intake volume V2 of low power operating condition, and as long as the intake air volume reaches V2, it is considered to reach the designed compression ratio. The air intake volume V2 of low power operating condition is 210 ml, the combustion chamber volume V1 is designed as 15 ml, the compression ratio of low power operating condition is 14:1, and the air-fuel ratio is 18:1. Under the low power operating condition, the internal combustion engine can reach a higher compression ratio. The actual pressure of low power operating condition is increased, and the compression work is reduced, and it is easy to start.

The internal combustion engine transits from the low power operating condition to the high power operating condition, and the opening of the throttle is increased and the air intake volume V3 of high power operating condition exceeds the air intake volume V2 of low power operating condition. Since the combustion chamber volume V1 is constant while the air intake volume increases, as long as the air intake volume exceeds the air intake volume V2 of low power operating condition, it is equivalent to increasing the compression ratio. The compression ratio increases as the air intake volume V3 of high power operating condition continuously increases, and the variable range of the compression ratio is 14:1-40:1.

Under the high power operating condition, the actual compression pressure of the internal combustion engine is increased, the compression density of the fuel air mixture is increased and the burning rate is accelerated. The ECU reduces the fuel-injection quantity in real time according to the feedback signal from the knock sensor and reduces the concentration of the fuel air mixture, maintains the matching between the concentration and the compression density of the fuel air mixture in real time and controls the duration of ignition in real time. The air-fuel ratio decreases as the compression ratio continuously increase, and the variable range of the air-fuel ratio is 18:1-50:1.

This embodiment employs the method for realizing variable compression ratio and variable air-fuel ratio, so as to ensure the compression density required by the combustion of the lean fuel air mixture and to maintain the burning rate required by the operation. High compression density generates high combustion pressure which can increase the power. The lean fuel air mixture generates low combustion temperature which can reduce pollution emissions and be an effective measure to improve the thermal efficiency of internal combustion engine.

In this embodiment, the exhaust temperature is lowered to 250 °C, so that the thermal efficiency is greatly improved.

### Third embodiment

This embodiment is a four-stroke compression ignition internal combustion engine, in which a throttle is needed to be additionally installed;
the cylinder working volume is 1,200 ml, and the combustion chamber volume V1 is designed as 25 ml;
the air intake volume V2 of low power operating condition is 500 ml;
the compression ratio of low power operating condition is 20:1;
the air-fuel ratio of low power operating condition is 16:1;
the air intake volume V3 of high power operating condition is 700 ml;
the range of variable compression ratio of high power operating condition is 20:1-48:1; and
the range of variable air-fuel ratio of high power operating condition is 16:1-60:1;

In this embodiment, the compression ratio is designed according to the air intake volume V2 of low power operating condition, and as long as the intake air volume reaches V2, it is considered to reach the designed compression ratio. The air intake volume V2 of low power operating condition is 500 ml, the combustion chamber volume V1 is designed as 25 ml, the compression ratio of low power operating condition is 20:1, and the air-fuel ratio is 16:1. Under the low power operating condition, the internal combustion engine can reach a higher compression ratio. The actual pressure of low power operating condition is increased, and the compression work is reduced, and it is easy to start.

The internal combustion engine transits from the low power operating condition to the high power operating condition, and the opening of the throttle is increased and the air intake volume V3 of high power operating condition exceeds the air intake volume V2 of low power operating condition. Since the combustion chamber volume V1 is constant while the air intake volume increases, as long as the air intake volume exceeds the air intake volume V2 of low power operating condition, it is equivalent to increasing the compression ratio. The compression ratio increases as the air intake volume V3 of high power operating condition continuously increases, and the variable range of the compression ratio is 20:1-48:1.

Under the high power operating condition, the actual compression pressure of the internal combustion engine is increased, the compression density of the fuel air mixture is increased and the burning rate is accelerated. The ECU reduces the fuel-injection quantity in real time according to the feedback signal from the knock sensor and reduces the concentration of the fuel air mixture, which maintains the matching between the concentration and the compression density of the fuel air mixture in real time and controls the duration of ignition in real time. The air-fuel ratio decreases as the compression ratio continuously increases, and the variable range of the air-fuel ratio is 16:1-60:1.

This embodiment employs the method for realizing variable compression ratio and variable air-fuel ratio, so as to ensure the compression density required by the combustion of the lean fuel air mixture and to maintain the burning rate required by the operation. High compression density generates high combustion pressure which can increase the power. The lean fuel air mixture generates low combustion temperature which can reduce pollution emissions and be an effective measure to improve the thermal efficiency of internal combustion engine.

In this embodiment, the exhaust temperature is lowered to 200 °C, so that the thermal efficiency is greatly improved.

### Fourth embodiment

This embodiment is a two-stroke compression ignition internal combustion engine, in which a throttle is needed to be additionally installed;
the cylinder working volume is 420 L, and the combustion chamber volume V1 is designed as 7 L;
the air intake volume V2 of low power operating condition is 175 L;
the compression ratio of low power operating condition is 25:1;
the air-fuel ratio of low power operating condition is 30:1;
the air intake volume V3 of high power operating condition is 245 L;
the range of variable compression ratio of high power operating condition is 25:1-60:1; and
the range of variable air-fuel ratio of high power operating condition is 30:1-70:1;

In this embodiment, the compression ratio is designed according to the air intake volume V2 of low power operating condition, and as long as the intake air volume reaches V2, it is considered to reach the designed compression ratio. The air intake volume V2 of low power operating condition is 175 L, the combustion chamber volume V1 is designed as 7 L, the compression ratio of low power operating condition is 25:1, and the air-fuel ratio is 30:1. Under the low power operating condition, the internal combustion engine can reach a higher compression ratio. The actual pressure of low power operating condition is increased, and the compression work is reduced, and it is easy to start.

The internal combustion engine transits from the low power operating condition to the high power operating condition, and the opening of the throttle is increased and the air intake volume V3 of high power operating condition exceeds the air intake volume V2 of low power operating condition. Since the combustion chamber volume V1 is constant while the air intake volume increases, as long as the air intake volume exceeds the air intake volume V2 of low power operating condition, it is equivalent to increasing the compression ratio. The compression ratio increases as the air intake volume V3 of high power operating condition continuously increases, and the variable range of the compression ratio is 25:1-60:1.

Under the high power operating condition, the actual compression pressure of the internal combustion engine is increased, the compression density of the fuel air mixture is increased and the burning rate is accelerated. The ECU reduces the fuel-injection quantity in real time according to the feedback signal of the knock sensor and reduces the concentration of the fuel air mixture, which maintains the matching between the concentration and the compression density of the fuel air mixture in real time and controls the duration of ignition in real time. The air-fuel ratio decreases as the compression ratio continuously increases, and the variable range of the air-fuel ratio is 30:1-70:1.

According to the method for realizing variable compression ratio and variable air-fuel ratio of an internal combustion engine as described in the present utility model, the closed-loop control of an oxygen sensor is canceled and the fuel-injection pulse width according to the knock signal of the knock sensor is adjusted. This embodiment employs the method for realizing variable compression ratio and variable air-fuel ratio, so as to ensure the compression density required by the combustion of the lean fuel air mixture and to maintain the burning rate required by the operation. High compression density generates high combustion pressure which can increase the power. The lean fuel air mixture generates low combustion temperature which can reduce pollution emissions, which is an effective measure to improve the thermal efficiency of internal combustion engine.

In this embodiment, the exhaust temperature is lowered to 180 °C, so that the thermal efficiency is greatly improved.

Finally, it should be noted that the above embodiments are merely illustrative of the technical solutions of the present invention and are not to be construed as the limit; Although the invention has been described in detail with reference to the foregoing embodiments, it will be understood by those skilled in the art that the technical solutions described in the foregoing various embodiments may be modified or some of the technical features thereof can be equivalently substituted; And such modifications or substitutions do not make the nature of the corresponding technical solutions depart from the spirit and scope of the technical solutions of the embodiments of the present invention.

## Claims

1. A method for realizing variable compression ratio and variable air-fuel ratio of an internal combustion engine, comprising the following steps:
(1) dividing an air intake volume in a cylinder into a first air intake volume and a second air intake volume, designing a compression ratio according to the first air intake volume and opening a throttle to enable the air intake volume to reach the first air intake volume;
(2) increasing the opening of the throttle to increase the air inflow to enable the second air intake volume to start the intake, the second air intake volume going beyond the first air intake volume, the compression ratio increasing with the increase of the air intake volume, the compression density of a fuel air mixture increasing with the increase of the compression ratio, and the air-fuel ratio reducing with the increase of the compression density of the fuel air mixture; and
(3) correcting, by an electronic control unit, a duration of ignition in real time according to a detonation signal fed back by a knock sensor, and controlling the fuel-injection quantity in real time to ensure the compression density required by the combustion of a lean fuel air mixture.

2. The method for realizing variable compression ratio and variable air-fuel ratio of an internal combustion engine according to claim 1, wherein the designed compression ratio is a compression ratio of the internal combustion engine under a low power operating condition, and the first air intake volume is an air intake volume under a low power operating condition, and the second air intake volume is an air intake volume under a high power operating condition.

3. The method for realizing variable compression ratio and variable air-fuel ratio of an internal combustion engine according to claim 2, wherein the second air intake volume is larger than the first air intake volume.

4. The method for realizing variable compression ratio and variable air-fuel ratio of an internal combustion engine according to claim 3, wherein the internal combustion engine is a four-stroke spark ignition internal combustion engine, the variable range of the compression ratio of the four-stroke spark ignition internal combustion engine is 10:1-26.7:1, and the variable range of the air-fuel ratio is 15:1-32:1.

5. The method for realizing variable compression ratio and variable air-fuel ratio of an internal combustion engine according to claim 3, wherein the internal combustion engine is a four-stroke spark ignition internal combustion engine, the variable range of the compression ratio of the four-stroke spark ignition internal combustion engine is 14:1-40:1, and the variable range of the air-fuel ratio is 18:1-50:1.

6. The method for realizing variable compression ratio and variable air-fuel ratio of an internal combustion engine according to claim 3, wherein the internal combustion engine is a four-stroke compression ignition internal combustion engine, the variable range of the compression ratio of the four-stroke compression ignition internal combustion engine is 20:1-48:1, and the variable range of the air-fuel ratio is 16:1-60:1.

7. The method for realizing variable compression ratio and variable air-fuel ratio of an internal combustion engine according to claim 3, wherein the internal combustion engine is a two-stroke compression ignition internal combustion engine, the variable range of the compression ratio of the two-stroke compression ignition internal combustion engine is 25:1-60:1, and the variable range of the air-fuel ratio is 30:1-70:1.

8. The method for realizing variable compression ratio and variable air-fuel ratio of an internal combustion engine according to claim 1, wherein the closed-loop control of an oxygen sensor is canceled, and the fuel-injection pulse width is adjusted according to the knock signal of the knock sensor.
